# EUROPÄISCHE PATENTSCHRIFT

(11) **EP 2 361 178 B1**
(45) Veröffentlichungstag und Bekanntmachung des Hinweises auf die Patenterteilung: **02.03.2016**
(21) Anmeldenummer: 10798515.2
(22) Anmeldetag: 21.12.2010
(51) Int. Cl.: B29C 67/00, B22F 3/105, B33Y 10/00, B33Y 30/00

(54) **VORRICHTUNG ZUM GENERATIVEN HERSTELLEN EINES DREIDIMENSIONALEN OBJEKTS MIT ISOLIERTEM BAUFELD**
DEVICE FOR THE GENERATIVE PRODUCTION OF A THREE-DIMENSIONAL OBJECT WITH AN ISOLATED CONSTRUCTION FIELD
DISPOSITIF POUR LA FABRICATION GÉNÉRATIVE D'UN OBJET TRIDIMENSIONNEL AVEC UNE ZONE DE CONSTRUCTION ISOLÉE

(30) Priorität: 05.01.2010 DE 102010004035
(43) Veröffentlichungstag der Anmeldung: 31.08.2011
(73) Patentinhaber: EOS GmbH Electro Optical Systems, 82152 Krailling (DE)
(72) Erfinder: BAUMANN, Andreas, 82166 Gräfelfing (DE); PHILIPPI, Jochen, 82166 Gräfelfing (DE); MATTES, Thomas, 82205 Gilching (DE)
(74) Vertreter: Prüfer & Partner mbB Patentanwälte · Rechtsanwälte
(86) Internationale Anmeldenummer: PCT/EP2010/007842
(87) Internationale Veröffentlichungsnummer: WO 2011/082812

(56) Entgegenhaltungen:
- EP-A2- 1 704 989
- WO-A1-2005/025780
- DE-B3-102006 053 121
- FR-A1- 2 774 931

## Beschreibung

Die vorliegende Erfindung bezieht sich auf eine Vorrichtung zum generativen Herstellen eines dreidimensionalen Objekts.

EP 0 764 079 B1 beschreibt eine bekannte Lasersintervorrichtung, mit einem Rahmen, der mit seinem oberen Abschnitt ein Baufeld umschließt; einem Träger, der in dem Rahmen angeordnet ist und durch eine Hubmechanik zumindest unterhalb des Baufelds vertikal bewegbar ist; einer Bestrahlungsvorrichtung, die einen Energiestrahl erzeugt, der durch eine Ablenkeinrichtung auf beliebige Punkte in dem Baufeld fokussiert wird, um in dem Baufeld befindliches Pulvermaterial selektiv zu sintern oder zu schmelzen; einem Beschichter zum Aufbringen einer Schicht eines Pulvermaterials auf den Träger oder einer zuvor aufgebrachten Schicht des Pulvermaterials. Die Lasersintervorrichtung hat eine Heizeinrichtung, die zum Aufheizen einer mit einem Beschichter aufgetragenen Pulverschicht auf eine für die Sinterung mittels des Laserstrahls erforderliche Vortemperatur dient. Trotz der Verwendung der Heizeinrichtung kann es zu Temperaturinhomogenitäten im Baufeld kommen, wodurch die mechanischen Eigenschaften der Objekte inhomogen sein können.

EP 1 704 989 A2 offenbart eine Vorrichtung zum generativen Herstellen eines dreidimensionalen Objekts, gemäß dem Oberbegriff des Anspruchs 1.

Es ist die Aufgabe der vorliegenden Erfindung, eine Vorrichtung zum generativen Herstellen eines dreidimensionalen Objekts vorzusehen, mit der die mechanischen Eigenschaften des hergestellten Objekts verbessert werden können.

Diese Aufgabe wird durch die Vorrichtung zum generativen Herstellen eines dreidimensionalen Objekts mit den Merkmalen des Anspruchs 1 gelöst. Vorteilhafte Weiterbildungen sind Gegenstand der Unteransprüche.

Die Erfindung hat den Vorteil, dass der Rahmen durch die Isolierung von dem Gehäuse der Vorrichtung thermisch isoliert ist, so dass wenig Wärme von dem Baufeld zu dem Gehäuse der Vorrichtung gelangt. In vorteilhafter Weise werden dadurch Temperaturgradienten insbesondere im Bereich des Baufelds reduziert. Durch eine gezielte Verringerung der Wärmeverluste kann das Temperaturgefälle im Randbereich des Baufelds positiv beeinflusst werden, so dass eine Anpassung an verschiedene Bauteilgeometrien und Pulverarten möglich ist. Zum Beispiel können der effektiv nutzbare Bereich innerhalb des Baufelds und die Schwundeigenschaften der herzustellenden Objekte verbessert werden.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts gemäß einem ersten Ausführungsbeispiel der vorliegenden Erfindung;
- Fig. 2: eine schematische Anordnung einer thermischen Isolierung bei einem Baufeld der Vorrichtung gemäß dem ersten Ausführungsbeispiel;
- Fig. 3: eine schematische Anordnung einer thermischen Isolierung bei einem Baufeld der Vorrichtung gemäß einem zweiten Ausführungsbeispiel der vorliegenden Erfindung;
- Fig. 4: eine schematische Ansicht einer Vorrichtung zum Herstellen eines dreidimensionalen Objekts gemäß einer Abwandlung des ersten Ausführungsbeispiels der vorliegenden Erfindung.

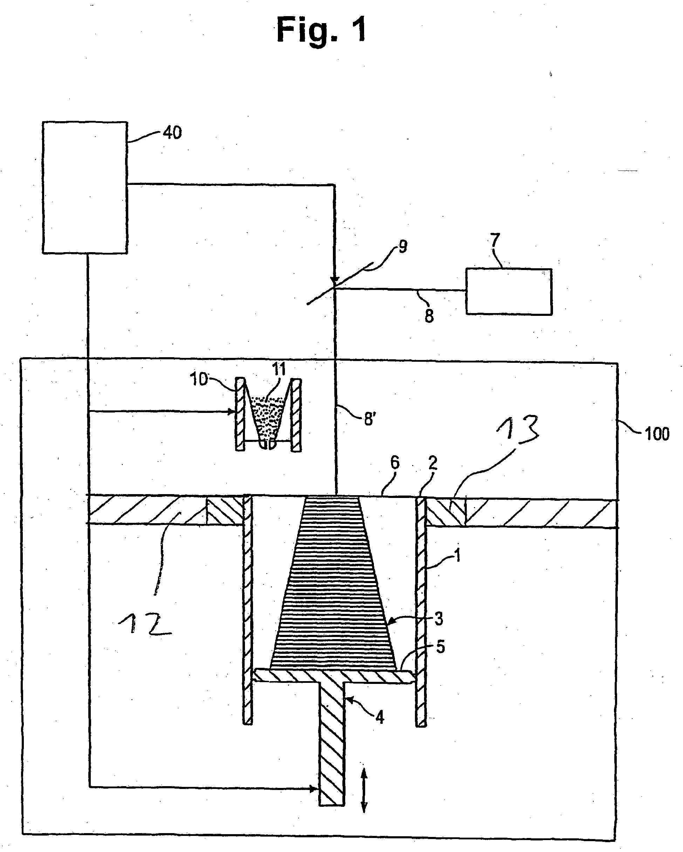

Die Fig. 1 zeigt eine schematische Ansicht einer Vorrichtung zum Herstellen eines dreidimensionalen Objekts 3 gemäß einem ersten Ausführungsbeispiel der vorliegenden Erfindung, die exemplarisch als Lasersintervorrichtung ausgebildet ist.

Die Lasersintervorrichtung weist einen nach oben hin offenen Rahmen 1 mit einem darin befindlichen, in vertikaler Richtung bewegbaren Träger 5 auf, der das herzustellende dreidimensionale Objekt 3 trägt. Der Rahmen 1 umschließt mit seinem oberen Abschnitt 2 ein Baufeld 6. Vorzugsweise bilden der Rahmen 1 und der Träger 5 einen austauschbaren Wechselrahmen, der der Lasersintervorrichtung entnommen werden kann. Der Träger 5 ist mit einer Hubmechanik 4 in Verbindung, die ihn zumindest unterhalb der Ebene des Baufelds 6 in vertikaler Richtung so verfährt, dass die Oberseite einer jeweils zu verfestigenden Pulverschicht in der Ebene des Baufelds 6 liegt. Als Ebene des Baufelds wird hier die Ebene angesehen, in der der obere Rand des oberen Abschnitts 2 liegt.

Des Weiteren ist ein Beschichter 10 zum Aufbringen einer Schicht eines Pulvermaterials 11 vorgesehen. Als Pulvermaterial 11 können alle lasersinterbaren Pulver verwendet werden, zum Beispiel lasersinterbare Polymere wie Polyaryletherketone, Polyarylethersulfane, Polyamide, Polyester, Polyether, Polyolefine, Polystyrole, Polyphenylensulfide, Polyvinylidenfluoride, Polyphenylenoxide, Polyimide deren Copolymere und Blends, die mindestens eines der vorangehenden Polymere einschließen, wobei die Auswahl jedoch nicht auf die oben genannten Polymere und Copolymere beschränkt ist. Besonders geeignete Polyaryletherketone können aus der Gruppe Polyetheretherketon (PEEK), Polyetherketoneketon (PEKK), Polyetherketon (PEK), Polyetheretherketoneketon (PEEKK) und Polyetherketoneetherketoneketon (PEKEKK) und Polyetheretheretherketon (PEEEK) sowie deren Copolymere insbesondere mit Polyorylethersulfonen sowie deren Blends ausgewählt werden, welche mindestens eines der zuvorgenannten Polymere beinhalten. Besonders geeignete Polyamid-Polymere oder Copolymere und deren Blends können aus der Gruppe ausgewählt werden, die aus Polamid 6/6T, Polyamidelastomeren wie Polyetherblockamide wie z.B. PEBAX-basierte Materialien, Polyamid 6, Polyamid 66, Polyamid 11, Polyamid 12, Polyamid 612, Polyamid 610, Polyamid 1010, Polyamid 1212, Polyamid PA6T/66, PA4T/46 und Copolymeren besteht, die mindestens eines der vorgenannten Polymere einschließen. Geeignete Polyesterpolymere oder Copolymere können aus der aus Polyalkylenterephtholaten (z.B. PET, PBT) und deren Copolymeren ausgewählt werden. Geeignete Polyolefinpolymere oder Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Des Weiteren können Polymere-Kompositpulver verwendet werden, welche Füllstoffe und/oder Additive neben dem entsprechenden Polymer, Copolymer oder Blend enthalten. Zu solchen Füllstoffen zählen beispielsweise Fasern wie z.B. Kohle- oder Glasfasernfasern und Carbon-Nanotubes, Füllstoffe mit einem geringem Aspektverhältnis wie z.B. Glaskugeln oder Alugries, mineralische Füllstoffe wie z.B. Titandioxid. Zu den Additiven zählen u.a. Prozeßhilfsmittel wie z.B. Rieselhilfsmittel der Aerosil-Serie (z.B. Aerosil 200), funktionelle Additive wie Hitzestabilisatoren, Oxidationsstabilisatoren, Farbpigmente (z.B. Graphit und Ruß) und Flammschutzmittel (z.B. Organophosphate, polybromierte Kohlenwasserstoffe). Als Pulvermaterial 11 können auch Metalle, Keramiken, Formsand und Verbundmaterialien verwendet werden. Als metallhaltiges Pulvermaterial kommen beliebige Metalle und deren Legierungen sowie Mischungen mit metallischen Komponenten oder mit nichtmetallischen Komponenten in Frage.

Der Beschichter 10 wird in einer vorbestimmten Höhe über dem Baufeld 6 verfahren, so dass die Schicht des Pulvermaterials 11 mit einer definierten Höhe über dem Träger 5 bzw. über der zuletzt verfestigten Schicht liegt. Die Vorrichtung weist des Weiteren eine Bestrahlungsvorrichtung in Gestalt eines Lasers 7 auf, der einen Laserstrahl 8, 8' erzeugt, der durch eine Ablenkeinrichtung 9 auf beliebige Punkte in dem Baufeld 6 fokussiert wird. Dadurch kann der Laserstrahl 8, 8' das Pulvermaterial 11 an den Stellen selektiv verfestigen, die dem Querschnitt des herzustellenden Objekts 3 entsprechen.

Die Lasersintervorrichtung kann eine Heizvorrichtung (nicht gezeigt) oberhalb des Baufelds 6 aufweisen, um eine frisch aufgetragene Pulverschicht auf eine Temperatur in der Nähe der zur Verfestigung notwendigen Prozesstemperatur des Pulvermaterials 11 vorzuheizen.

Mit dem Bezugszeichen 100 ist ein Gehäuse bezeichnet, in dem der Rahmen 1, der Träger 5 und der Beschichter 10 angeordnet sind. Das Innere des Gehäuses 100 wird nachfolgend als Bauraum bezeichnet. Vorzugsweise ist das Gehäuse gasdicht ausgebildet und hat im oberen Bereich einen Einlass zur Einleitung des Laserstrahls 8, 8' hat. Vorzugsweise wird ein Schutzgas in das Gehäuse 100 eingeführt. Es ist ferner eine Steuereinheit 40 vorgesehen, über die die Vorrichtung in koordinierter Weise zum Durchführen des Bauprozesses und zum Steuern des Energieeintrags durch den Laser 7 gesteuert wird.

In der Vorrichtung ist eine Platte 12 vorgesehen, die mit dem Rahmen 1, zum Beispiel an dessen oberem Abschnitt 2, und mit einem Gehäuse der Vorrichtung in Kontakt ist.

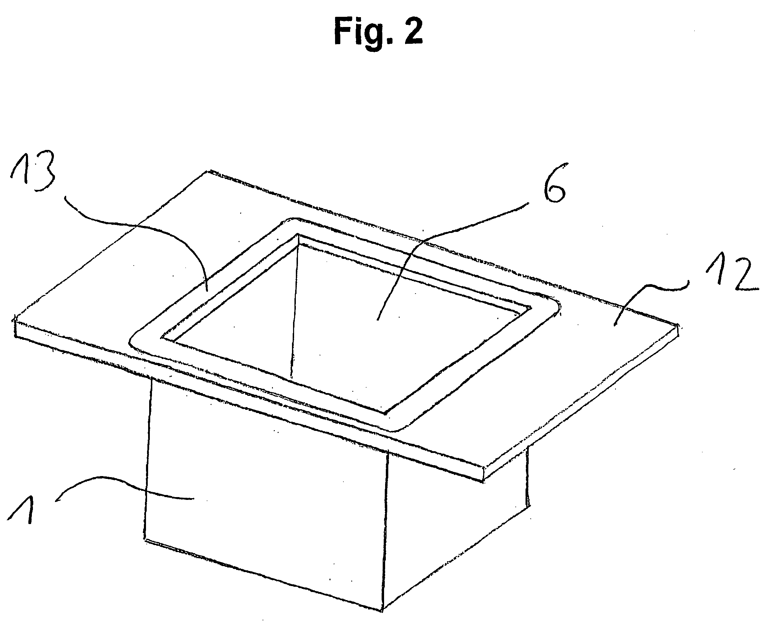

Die Vorrichtung hat eine thermische Isolierung 13, die zwischen dem Rahmen 1 und der Platte 12 angeordnet ist. Die thermische Isolierung 13 ist vorzugsweise in der Ebene des Baufelds 6 angeordnet, kann sich jedoch auch unterhalb oder oberhalb der Ebene des Baufelds 6 befinden. Die Fig. 2 zeigt, dass die Isolierung 13 in der Platte 12 integriert ist und umlaufend um den Rahmen 1 angeordnet ist. Der Rahmen 1 ist durch die Isolierung 13 von dem Gehäuse 100 der Vorrichtung thermisch isoliert, so dass wenig Wärme von dem Baufeld 6 zu dem Gehäuse 100 und zu der das Baufeld umgebenden Baufeldumgebung gelangt. In vorteilhafter Weise werden dadurch Temperaturgradienten insbesondere im Randbereich des Baufelds 6 reduziert. Der Begriff "Baufeldumgebung" bezeichnet hierbei einen in der Ebene des Baufelds 6 liegenden Bereich innerhalb des Gehäuses 100, der lateral an das Baufeld 6 angrenzt und sich zwischen Baufeld 6 und Gehäuse 100 erstreckt.

Gemäß der Erfindung ist die Isolierung 13 lösbar an der Platte 12 angebracht. Dadurch ist es möglich, die Isolierung 13 als wechselbaren Einsatz auszubilden.

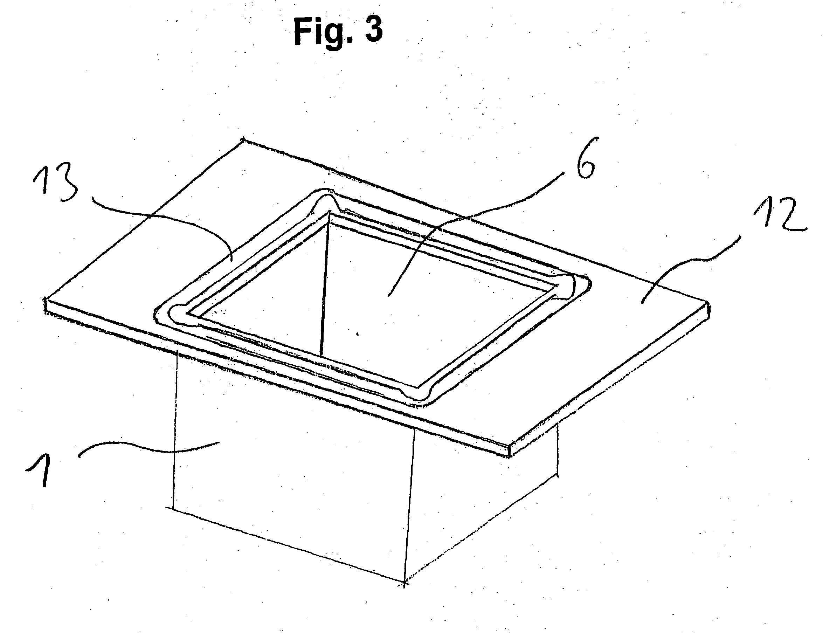

Die Fig. 3 zeigt ein zweites Ausführungsbeispiel der thermischen Isolierung 13. Diese Isolierung 13 hat an verschiedenen Umfangspositionen des Rahmens 1 unterschiedliche Wärmeleitfähigkeiten. Die Isolierung 13 erstreckt sich horizontal vom Rahmen 1 nach außen, wobei das Maß der horizontalen Erstreckung an verschiedenen Umfangspositionen des Rahmens 1 variiert. Vorzugsweise ist das Maß der horizontalen Erstreckung an den Ecken des Rahmens 1 größer als an anderen Umfangspositionen des Rahmens 1. Die Wärmeverluste sind dadurch variabel entlang des Umfangs des Baufelds 6, und die Wärmeverluste können insbesondere an den Ecken des Rahmens 1 reduziert werden. Durch die gezielte Reduzierung der Wärmeverluste kann das Temperaturgefälle im Randbereich des Baufelds 6 positiv beeinflusst werden, so dass eine Anpassung an verschiedene Bauteilgeometrien und Pulverarten möglich ist. Zum Beispiel können der effektiv nutzbare Bereich des Baufelds 6 und die Schwundeigenschaften der herzustellenden Objekte 3 verbessert werden.

Beispielsweise zur Erzielung unterschiedlicher spezifischer Wärmeleitfähigkeiten kann die Isolierung 13 an verschiedenen Umfangspositionen des Rahmens 1 unterschiedliche Materialien enthalten, die unterschiedliche spezifische Wärmeleitfähigkeiten haben. Je nach Anwendungsfall können verschiedene Isolierungen 13 an unterschiedlichen Umfangspositionen des Rahmens 1 an der Platte 12 angebracht werden, die verschiedene Maße der horizontalen Erstreckung und/oder verschiedene Materialien aufweisen.

Es ist denkbar, dass die Isolierung 13 aus einem mechanisch belastbaren Isoliermaterial, einem mechanisch nicht belastbaren Isoliermaterial oder einer Kombination davon besteht.

Der Vorteil eines mechanisch belastbaren Isoliermaterials besteht darin, dass dieses direkt an dem Rahmen befestigt werden kann, ohne dass ein spezieller Rahmen oder Halter bereitgestellt werden muss. Darüber hinaus kann das mechanisch belastbare Isoliermaterial leicht zugeschnitten werden, und es ist leicht austauschbar. Im Vergleich mit einem mechanisch nicht belastbaren Isoliermaterial ist jedoch die Isolierwirkung im Allgemeinen geringer. Ein Beispiel eines mechanisch belastbaren Isoliermaterials ist das Material DOTHERM^{®} oder DOGLAS^{®} der Firma DOTHERM GmbH & Co. KG. Die Erfindung ist aber nicht auf dieses Material beschränkt.

Der Vorteil eines mechanisch nicht belastbaren Isoliermaterials liegt im Vergleich mit einem mechanisch belastbaren Isoliermaterial in der besseren Isolierwirkung sowie in einem günstigeren Materialpreis und einer besseren Verfügbarkeit. Im Vergleich mit dem mechanisch belastbaren Isoliermaterial muss bei dem mechanisch nicht belastbaren Isoliermaterial jedoch im Allgemeinen ein passender Rahmen, Halter oder ein Gehäuse vorgesehen werden. Beispiele eines mechanisch nicht belastbaren Isoliermaterials sind Glasfaser-Vlies, Glasfasermatten oder das Material PROMALIGHT der Firma Promat GmbH. Die Erfindung ist aber nicht auf diese Materialien beschränkt.

Die Isolierung 13 kann aus wärmebeständigem Kunststoff bestehen. Beispiele eines geeigneten Kunststoffs sind Polystyrol, Polyimid, Polyetherimid, Polybenzimidazole (PBI), PUR, aromatisches Polyamid, Polyacrynitril. Durch Beimischung von Phenol-Formaldehydharzen kann eine verbesserte Temperaturbeständigkeit erzielt werden.

Außerdem ist es gemäß der Erfindung denkbar, das zum Bauen verwendete Pulvermaterials 11 selbst als Isoliermaterial zu verwenden. In diesem Fall kann die thermischen Isolierung durch einen Spalt (nicht gezeigt) zwischen dem Rahmen 1 und der Platte 12 verwirklicht werden, wobei der Spalt nach unten geschlossen bzw. pulverdicht abgeschottet ist. Eine derartige Abdichtung des Spalts kann mittels einer flexiblen Dichtung erfolgen. Wenn der Beschichter 10 eine Schicht des Pulvermaterials 11 auf den Träger 5 oder einer zuvor aufgebrachten Schicht des Pulvermaterials 11 aufbringt, wird dabei der Spalt mit dem Pulvermaterial 11 gefüllt. Das Pulvermaterial 11 im Spalt hat im Allgemeinen eine hervorragende thermische Isolierwirkung.

Bei dem Betrieb der Vorrichtung wird in einem ersten Schritt der Träger 5 durch die Hubmechanik 4 soweit nach unten verfahren, bis seine obere Seite um die gewünschte Dicke einer ersten Pulverschicht unterhalb der Ebene des Baufelds 6 liegt. Dann wird durch den Beschichter 10 eine erste Schicht des Pulvermaterials 11 auf den Träger 5 aufgebracht und geglättet.

Falls die Heizvorrichtung vorgesehen ist, kann durch die Heizvorrichtung die Temperatur des obersten Pulvermaterials 11 global auf wenige °C unterhalb der zur Verfestigung notwendigen Prozesstemperatur vorgeheizt werden. Anschließend steuert die Steuereinheit 40 die Ablenkeinrichtung 9 derart, dass der abgelenkte Laserstrahl 8, 8' selektiv an den Stellen der Schicht des Pulvermaterials 11 auftrifft, die verfestigt werden sollen. Dadurch wird an diesen Stellen das Pulvermaterial 11 verfestigt bzw. gesintert, so dass hier das dreidimensionale Objekt 3 entsteht.

In einem nächsten Schritt wird der Träger 5 durch die Hubmechanik 4 um die gewünschte Dicke der nächsten Schicht abgesenkt. Durch den Beschichter 10 wird eine zweite Pulvermaterialschicht aufgetragen, geglättet und mittels des Laserstahls 8, 8' selektiv verfestigt. Diese Schritte werden so oft durchgeführt, bis das gewünschte Objekt 3 hergestellt ist.

Durch die thermische Isolierung 13 können dabei die Temperaturgradienten insbesondere im Randbereich des Baufelds 6 reduziert werden.

Die erfindungsgemäße Vorrichtung ist insbesondere bei Lasersinterprozessen anwendbar, bei denen die Temperatur der obersten Pulverschicht im Baufeld 6 durch eine separate Heizvorrichtung auf wenige °C unterhalb der zur Verfestigung notwendigen Prozesstemperatur des Pulvermaterials vorerwärmt wird, wobei die zusätzliche Strahlung durch den Laserstrahl 8' einen weiteren Energieeintrag zum Verfestigen des Pulvermaterials liefert. Dies ist insbesondere bei der Verwendung von pulverförmigen Kunststoffmaterial der Fall.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Zum Beispiel ist die erfindungsgemäße Vorrichtung nicht nur beim Lasersintern anwendbar, sondern auf alle pulverbasierten, generativen Verfahren, bei denen pro aufzutragender Schicht ein Werkstoff bzw. ein Pulvermaterial verwendet wird, welches durch die energiehaltige Strahlung verfestigt wird. Die energiehaltige Strahlung muss nicht unbedingt ein Laserstrahl 8' sein, sondern kann zum Beispiel auch ein Elektronenstrahl sein.

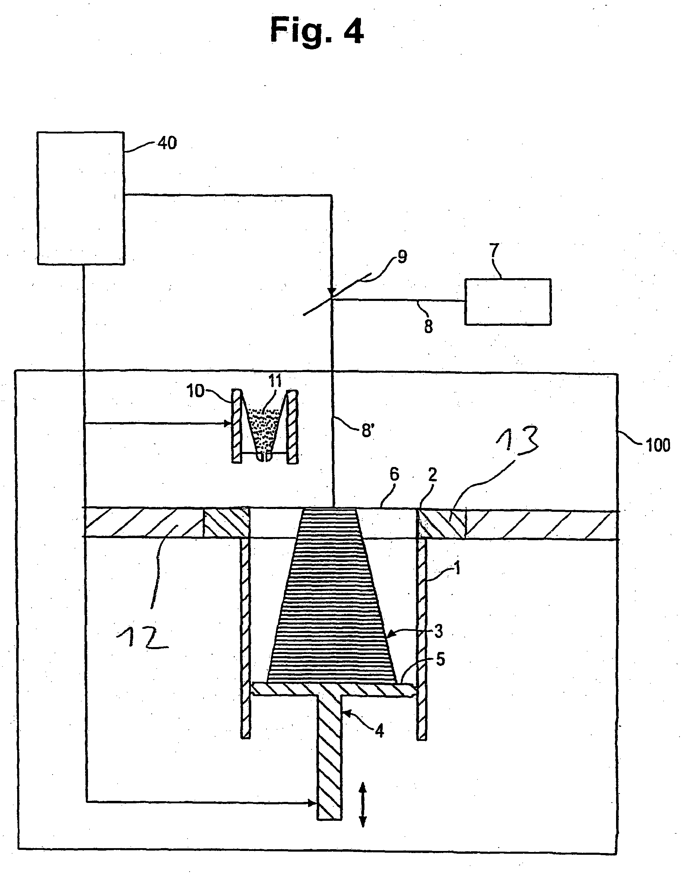

Bei dem ersten Ausführungsbeispiel gemäß der Fig. 1 ist die thermische Isolierung 13 im Wesentlichen in der Ebene des Baufelds 6 angeordnet, welche durch den oberen Rand des oberen Abschnitts 2 des Rahmens 1 definiert wurde. Die Isolierung 13 muss sich jedoch nicht an einem Außenumfang des Rahmens 1 angeordnet sein, wie dies im ersten Ausführungsbeispiel gemäß der Fig. 1 der Fall ist. Die Fig. 4 zeigt eine Abwandlung, bei der die thermische Isolierung 13 über dem oberen Abschnitt 2 des Rahmens 1 angeordnet ist und vorzugsweise mit diesem in Kontakt ist. Wenn der Rahmen 1 als Wechselrahmen ausgeführt ist, kann der obere Abschnitt 2 des Wechselrahmens 1 von unten an die Isolierung 13 anstoßen. In vorteilhafter Weise wird dadurch eine gute Abdichtung zwischen dem Wechselrahmen 1 und der Isolierung 13 erreicht. Die "Ebene des Baufelds" wird bei diesem Ausführungsbeispiel dann nicht mehr durch den oberen Rand des Abschnitts 2 definiert, sondern durch die Oberseite der Platte 12, welche in dieser Ebene liegt.

Ferner muss die Isolierung 13 bei allen Ausführungsbeispielen den Rahmen 1 nicht vollständig umschließen, sondern kann nur an einigen Stellen des Umfangs des Rahmens 1 angeordnet sein.

Des Weiteren ist es vorteilhaft, wenn die Isolierung 13 in unmittelbarer Nähe des Rahmens 1 angebracht ist und beispielsweise unmittelbar an diesen angrenzt.

## Patentansprüche

1. Vorrichtung zum generativen Herstellen eines dreidimensionalen Objekts (3), mit:
einem Rahmen (1), der mit seinem oberen Abschnitt (2) ein Baufeld (6) umschließt;
einer Platte (12), die in Kontakt mit dem Rahmen (1) und mit einem Gehäuse (100) der Vorrichtung ist;
einem Träger (5), der in dem Rahmen (1) angeordnet ist und durch eine Hubmechanik (4) vertikal bewegbar ist;
einer Bestrahlungsvorrichtung (7), die einen Energiestrahl (8, 8') erzeugt, der durch eine Ablenkeinrichtung (9) auf beliebige Punkte in dem Baufeld (6) fokussiert wird, um in dem Baufeld (6) befindliches Pulvermaterial (11) selektiv zu sintern oder zu schmelzen;
einem Beschichter (10) zum Aufbringen einer Schicht eines Pulvermaterials (11) auf den Träger (5) oder eine zuvor aufgebrachte Schicht des Pulvermaterials (11), **gekennzeichnet durch**
eine thermische Isolierung (13), die zwischen dem Rahmen (1) und der Platte (12) angeordnet ist;
wobei die Isolierung (13) entweder lösbar an der Platte (12) angebracht und als wechselbarer Einsatz ausgebildet ist oder **durch** einen Spalt zwischen dem Rahmen (1) und der Platte (12) verwirklicht ist, wobei der Spalt nach unten pulverdicht abgeschottet ist und **durch** den Beschichter (10) mit Pulvermaterial (11) befüllbar ist.

2. Vorrichtung gemäß Anspruch 1,
wobei die Isolierung (13) umlaufend um den Rahmen (1) angeordnet ist.

3. Vorrichtung gemäß einem der vorherigen Ansprüche,
wobei, falls die Isolierung (13) lösbar an der Platte (12) angebracht und als wechselbarer Einsatz ausgebildet ist, die Isolierung (13) an verschiedenen Umfangspositionen des Rahmens (1) unterschiedliche Wärmeleitfähigkeiten aufweist.

4. Vorrichtung gemäß einem der vorherigen Ansprüche,
wobei sich die Isolierung (13) vom Rahmen (1) horizontal nach außen erstreckt, wobei das Maß der horizontalen Erstreckung an verschiedenen Umfangspositionen des Rahmens (1) variiert.

5. Vorrichtung gemäß dem vorherigen Anspruch,
wobei das Maß der horizontalen Erstreckung an Ecken des Rahmens (1) größer ist als an anderen Umfangspositionen des Rahmens (1).

6. Vorrichtung gemäß einem der vorherigen Ansprüche,
wobei, falls die Isolierung (13) lösbar an der Platte (12) angebracht und als wechselbarer Einsatz ausgebildet ist, die Isolierung (13) an verschiedenen Umfangspositionen des Rahmens (1) unterschiedliche Materialien enthält.

7. Vorrichtung gemäß einem der vorherigen Ansprüche,
wobei, falls die Isolierung (13) lösbar an der Platte (12) angebracht und als wechselbarer Einsatz ausgebildet ist, die Isolierung (13) aus einem mechanisch belastbaren und/oder einem mechanisch nicht belastbaren Isoliermaterial besteht.

8. Vorrichtung gemäß einem der vorherigen Ansprüche,
wobei der Rahmen (1) ein Wechselrahmen (1) ist, der modular in die Vorrichtung einsetzbar und herausnehmbar ist.

9. Vorrichtung gemäß Anspruch 8, wobei der Wechselrahmen (1) von unten an die thermische Isolierung (13) anstößt.

10. Verwendung einer Vorrichtung nach einem der Ansprüche 1 bis 9 zur generativen Herstellung eines dreidimensionalen Körpers unter Verwendung von Kunststoffpulver als Baumaterial.

## Claims

1. A device for generatively manufacturing a three-dimensional object (3), comprising:
a frame (1) which surrounds by its upper portion (2) a building field (6);
a plate (12) which is in contact with the frame (1) and with a housing (100) of the device;
a support (5) which is arranged in the frame (1) and vertically movable by a lift mechanics (4);
a radiation device (7) which generates an energetic beam (8, 8') which is focused to arbitrary points in the building field (6) by a deflection means (9) so as to selectively sinter or melt powdery material (11) which is present in the building field (6);
a coater (10) for applying a layer of a powdery material (11) onto the support (5) or a previously applied layer of the powdery material (11),
**characterized by**
a thermal insulation (13) arranged between the frame (1) and the plate (12);
wherein the insulation (13) is either releasably mounted to the plate (12) and formed as an exchangeable insert or is realized by a gap between the frame (1) and the plate (12), wherein the gap is powder-tightly sealed at the bottom and can be filled with powdery material (11) by the coater (10).

2. The device according to claim 1,
wherein the insulation (13) is circumferentially arranged around the frame (1).

3. The device according to one of the preceding claims,
wherein, if the insulation (13) is releasably mounted to the plate (12) and formed as an exchangeable insert, the insulation (13) has different heat conductivities at different circumferential positions of the frame (1).

4. The device according to one of the preceding claims,
wherein the insulation (13) extends horizontally outward from the frame (1), wherein the dimension of the horizontal extension changes at different circumferential positions of the frame (1).

5. The device according to the preceding claim,
wherein the dimension of the horizontal extension at corners of the frame (1) is larger than at other circumferential positions of the frame (1).

6. The device according to one of the preceding claims,
wherein, if the insulation (13) is releasably mounted to the plate (12) and formed as an exchangeable insert, the insulation (13) contains different materials at different circumferential positions of the frame (1).

7. The device according to one of the preceding claims,
wherein, if the insulation (13) is releasably mounted to the plate (12) and formed as an exchangeable insert, the insulation (13) consists of an insulation material with mechanical load capacity and/or an insulation material without mechanical load capacity.

8. The device according to one of the preceding claims,
wherein the frame (1) is a replacement frame (1) which is modularly insertable into and removable from the device.

9. The device according to claim 8, wherein the replacement frame (1) abuts from the bottom to the thermal insulation (13).

10. Use of a device according to one of claims 1 to 9 for generatively manufacturing a three-dimensional body by use of synthetic plastic powder as building material.

## Revendications

1. Dispositif pour la fabrication générative d'un objet tridimensionnel (3), avec:
un cadre (1), qui entoure un champ de construction (6) avec sa partie supérieure (2);
une plaque (12), qui est en contact avec le cadre (1) et avec une enceinte (100) du dispositif;
un support (5), qui est disposé dans le cadre (1) et qui est mobile verticalement au moyen d'un mécanisme de levage (4);
un dispositif d'irradiation (7), qui produit un faisceau d'énergie (8, 8'), qui est focalisé sur des points quelconques du champ de construction (6) au moyen d'un dispositif de déviation (9), afin de fritter ou de fondre de façon sélective un matériau en poudre (11) se trouvant dans le champ de construction (6);
un système de revêtement (10) pour le dépôt d'une couche d'un matériau en poudre (11) sur le support (5) ou sur une couche préalablement déposée du matériau en poudre (11),
**caractérisé par**
une isolation thermique (13), qui est disposée entre le cadre (1) et la plaque (12);
dans lequel l'isolation (13) est soit déposée de façon amovible sur la plaque (12) et réalisée sous la forme d'un insert remplaçable soit réalisée à travers une fente entre le cadre (1) et la plaque (12), dans lequel la fente est close vers le bas de façon étanche à la poudre et peut être remplie de matériau en poudre (11) au moyen du système de revêtement (10).

2. Dispositif selon la revendication 1, dans lequel l'isolation (13) est disposée autour du cadre (1).

3. Dispositif selon l'une quelconque des revendications précédentes, dans lequel, dans le cas où l'isolation (13) est déposée de façon amovible sur la plaque (12) et est réalisée sous la forme d'un insert remplaçable, l'isolation (13) présente des conductibilités thermiques différentes à différentes positions périphériques du cadre (1).

4. Dispositif selon l'une quelconque des revendications précédentes, dans lequel l'isolation (13) s'étend horizontalement vers l'extérieur à partir du cadre (1), dans lequel la dimension de l'extension horizontale varie à différentes positions périphériques du cadre (1).

5. Dispositif selon la revendication précédente, dans lequel la dimension de l'extension horizontale est plus grande dans les angles du cadre (1) qu'à d'autres positions périphériques du cadre (1).

6. Dispositif selon l'une quelconque des revendications précédentes, dans lequel, dans le cas où l'isolation (13) est déposée de façon amovible sur la plaque (12) et est réalisée sous la forme d'un insert remplaçable, l'isolation (13) contient des matériaux différents à différentes positions périphériques du cadre (1).

7. Dispositif selon l'une quelconque des revendications précédentes, dans lequel, dans le cas où l'isolation (13) est déposée de façon amovible sur la plaque (12) et est réalisée sous la forme d'un insert remplaçable, l'isolation (13) se compose d'un matériau isolant pouvant être chargé mécaniquement et/ou d'un matériau isolant ne pouvant pas être chargé mécaniquement.

8. Dispositif selon l'une quelconque des revendications précédentes, dans lequel le cadre (1) est un cadre interchangeable (1), qui peut être introduit dans le dispositif et retiré hors de celui-ci de façon modulaire.

9. Dispositif selon la revendication 8, dans lequel le cadre interchangeable (1) bute par le bas contre l'isolation thermique (13).

10. Utilisation d'un dispositif selon l'une quelconque des revendications 1 à 9 pour la fabrication générative d'un objet tridimensionnel en utilisant une poudre de matière plastique comme matériau de construction.
